Europäisches Patentamt

European Patent Office

Office européen des brevets

(19)

(11) Veröffentlichungsnummer: **0 001 605**
**B1**

(12) **EUROPÄISCHE PATENTSCHRIFT**

(21) Anmeldenummer: **78101100.2**

(22) Anmeldetag: **07.10.78**

(51) Int. Cl.³: **G 03 B 17/26, G 03 C 3/02, B 65 H 23/20, B 65 H 39/16**

(54) Vorrichtung zum Wickeln eines Filmwickels

(30) Priorität: **20.10.77 DE 2747099**

(43) Veröffentlichungstag der Anmeldung:
**02.05.79 Patentblatt 79/09**

(45) Bekanntmachung des Hinweises auf die Patenterteilung:
**01.10.80 Patentblatt 80/20**

(84) Benannte Vertragsstaaten:
**BE DE FR GB**

(56) Entgegenhaltungen:
**DE - A - 2 155 613**
**DE - A - 2 254 333**
**DE - A - 2 533 200**
**US - A - 3 312 415**
**US - A - 3 398 914**
**ANTRIEBSTECHNIK, Bd. 12, 1973, Nr. 3 K. NEU "Die zweite Spannrolle" Seiten 57 bis 63**

(73) Patentinhaber: **AGFA-GEVAERT AKTIENGESELLSCHAFT**
**Patentabteilung**
**D - 5090 Leverkusen 1 (DE)**

(72) Erfinder: **Klinkhammer, Ralf L., Dipl.-Ing.**
**Hans-Schulten-Strasse 14**
**D - 5000 Köln 91 (DE)**
**Hoffacker, Franz, Dipl.-Ing.**
**Schumannweg 11**
**D - 4018 Langenfeld (DE)**
**Steinbüchel, Günter H.**
**Gezelinallee 25**
**D - 5090 Leverkusen (DE)**
**Hilgers, Manfred, Ing.-grad.**
**Kurt-Schumacher-Ring 109**
**D - 5090 Leverkusen 1 (DE)**

## Vorrichtung zum Wickeln eines Filmwickels

Die Erfindung betrifft eine Vorrichtung zum Wickeln eines Wickels aus perforiertem Filmband bei gleichzeitiger Einlage einer perforierten Allonge, bestehend aus einem Wickelgerät mit vorgeschalteten getrennten Zuführungen für Filmband und Allonge, die jeweils eine Abrollung für den Vorratswickel, einen Schleifenzieher für den Längenausgleich, ein Transportrad mit zugeordneten umlaufenden Trennmessern und Umlenkrollen besitzen, wobei in der Zuführung für das Filmband ein Klebestreifenspender mit umlaufendem Stempel angeordnet ist und Einrichtungen vorhanden sind, die es gestatten das Filmband und die Allonge so übereinander zu wickeln, daß die Perforationen übereinander liegen.

Es werden Filmwickel in großen Stückzahlen hergestellt, bei denen eine Allonge als Schutzpapierstreifen zusammen mit dem Film zu einem Wickel gewickelt wird, aus dem nur noch eine Allongenzunge herausragt. Dabei ist erforderlich, daß die Perforationslöcher von Filmband und Allonge genau übereinanderliegen, da hier später der Taststift für die Unterbrechung des Filmtransportes in der Kamera eingreift. Aus der DE—OS 2254333 ist eine Vorrichtung zum Montieren und Laden von Filmpatronen bekannt. In dieser Vorrichtung werden ebenfalls Wickel hergestellt, die aus Allonge und Filmband bestehen. Die Übereinanderlage der Perforationslöcher von Film und Papier wird mit einer Steuerung aufrechterhalten und mit Photozellen abgefragt. Befinden sich die Perforationslöcher nicht in Übereinstimmung so werden diese Wickel herausgenommen.

Aufgrund der Toleranzen in den Längen der Streifen und der Dicke der Streifen erlaubt diese Vorrichtung keine sichere Übereinanderlage der Perforationslöcher von Filmband und Allonge ohne hohen Ausschuß an Material.

Aus der DE—OS 2155613 ist eine Maschine zum Wickeln von Rollfilmspulen der gleichen Art bekannt. Die Maschine zählt die Perforationslöcher durch mehrere Photozellen als Überwachungssysteme und steuert die Übereinanderlage der Perforationslöcher von Allonge und Filmband durch angetriebene Rollen. Diese Maschine arbeitet diskontinuierlich und gewährleistet ebenfalls keine exakte Übereinanderlage der Perforationslöcher bei bestehenden Toleranzen in der Länge von Filmband und Allonge.

Der Erfindung liegt die Aufgabe zugrunde, eine Vorrichtung zu finden, die trotz der herstellungsbedingten Toleranzen in den Längen von Allongen und Filmen, es gestattet, Wickel aus Filmen und Allongen herzustellen, deren entsprechende Perforationslöcher sicher und einwandfrei übereinanderliegen.

Die Aufgabe wird erfindungsgemäß dadurch gelöst, daß die beiden durch einen Antrieb formschlüssig miteinander verbundenen Transporträder für Filmband und Allonge mit der Wickelwelle über einen Zahnriemen gekoppelt sind, dessen Lasttrum mit Hilfe einer an einer Zugfeder hängenden, einseitig mit einem Anschlag versehenen Tänzerrolle in zwei Schenkel unterteilt ist, die mit zunehmendem Wickeldurchmesser kürzer werden, und dessen Leertrum mit Hilfe einer an einer einstellbaren Feder hängenden Tänzerrolle auslenkbar ist, um die freiwerdende Zahnriemenlänge aus dem Lasttrum aufzunehmen, und daß Gleitmittel vorhanden sind, die zeitweilig auf dem Umfang der Transporträder wirksam sind und dadurch eine Verschiebung von Filmband und Allonge ermöglichen, so daß deren Perforationslochränder an den jeweiligen Zähnen der Transporträder anliegen.

Der Vorteil dieser Vorrichtung ist, daß bei jedem Arbeitsgang zur Fertigung eines Wickels die Drehzahl der Wickelwelle bei gleicher Zufuhrgeschwindigkeit von Filmband und Allonge entsprechend der Zunahme des Wickeldurchmessers verringert wird, indem durch Vorschwenken der Tänzerrolle im Lasttrum entsprechend dem dort jeweils herrschenden Kräfteparallelogramm der Weg Wickelachse-Tänzerrolle-Antrieb verkürzt wird, so daß nur noch ein Teil der Zahnriemengeschwindigkeit bei der Zahnscheibe an der Wickelachse ankommt. Die Tänzerrolle des Leertrums übernimmt bei jedem Arbeitsgang die freiwerdende Länge des Zahnriemens.

Nach Fertigstellung des Wickels gehen beide Tänzerrollen unter der Federkraft in die Ausgangslage zurück und es werden sowohl die freigewordene Länge des Zahnriemens im Leertrum als auch die verkürzte Länge des Zahnriemens im Lasttrum ausgeglichen, wodurch die Wickelwelle in eine Stellung gebracht wird, in welcher diese die nächste Allonge sicher ansaugen und anwickeln kann.

Ein weiterer Vorteil dieser Vorrichtung ist die genaue Positionierung der Perforationslöcher auf den Transporträdern bei jedem Arbeitstakt. Das Filmband und die Allonge werden auf den Transporträdern durch Unterdruck gehalten. Außerdem besitzen die Transporträder der Perforation der Streifen entsprechend angebrachte Transportzähne. Bei jedem Arbeitstakt wird durch Einblasen von Luft zwischen Transportrad und Filmband das Filmband auf einem Luftkissen zurückgezogen, bis die Perforationslöcher an den Zähen des Transportrades anliegen. Die Allonge wird nach vorne zur Wickelwelle gezogen bis die Perforationslöcher an den Zähnen anliegen. Auf diese Art und Weise ist trotz den herstellungsbedingten Toleranzen in den Längen der Streifen für jeden einzelnen Wickel die gleiche Ausgangsposition gewährleistet.

In einer besonderen Ausführungsform sind die Tänzerrollen an Schwenkarmen befestigt.

Die Konstruktion der Vorrichtung ist einfach und erlaubt auch eine gute Kontrolle während des Betriebes.

Ein Ausführungsbeispiel der Erfindung ist in den Zeichnungen dargestellt und wird im folgenden näher beschrieben.

Es zeigen:

Fig. 1 eine Übersicht über den Wickelautomat;

Fig. 2 ein Schema der Kopplung von Allongen-Transportrad und Wickelwelle.

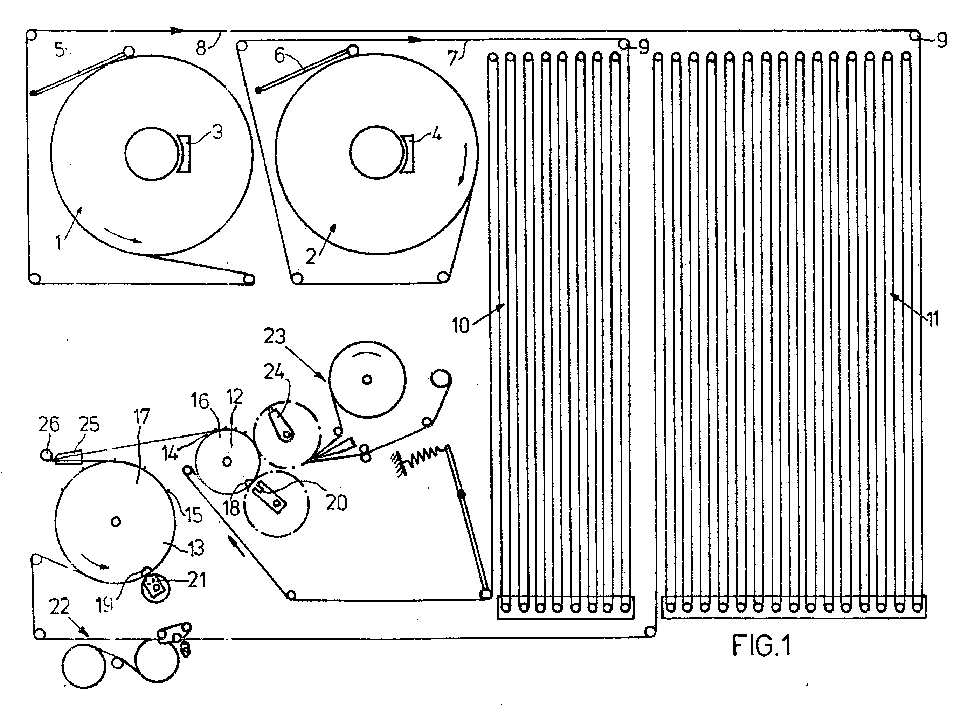

Fig. 1 zeigt einen Wickelautomaten, der je eine Abrollung 1, 2 mit je einer Bremse 3, 4 und je einem Vorratsrollenleeranzeiger 5, 6 für ein Filmband 7 und eine Allonge 8 besitzt, die jeweils über Umlenkrollen 9 und Schleifenzieher 10, 11 mit einem Transportrad 12, 13, verbunden sind, welches am Umfang in Perforationslöcher eingreifende Zähne 14, 15, Austrittsöffnungen von Luftkanälen 16, 17 und eine Gegenschneide 18, 19 für ein umlaufendes Trennmesser 20, 21 besitzt. Weiter ist für die Wickelsicherung ein Klebestreifenspender 22 mit Andrückrolle korrespondierend mit dem Transportrad 13 für die Allonge 8 und ein Klebestreifenspender 23 mit umlaufendem Stempel 24 korrespondierend mit dem Transportrad 12 für das Filmband 7 vorgesehen. An die Transporträder 12, 13 schließt eine Filmführung 25 für das Filmband 7 und die Allonge 8 zur Wickelwelle 26 an.

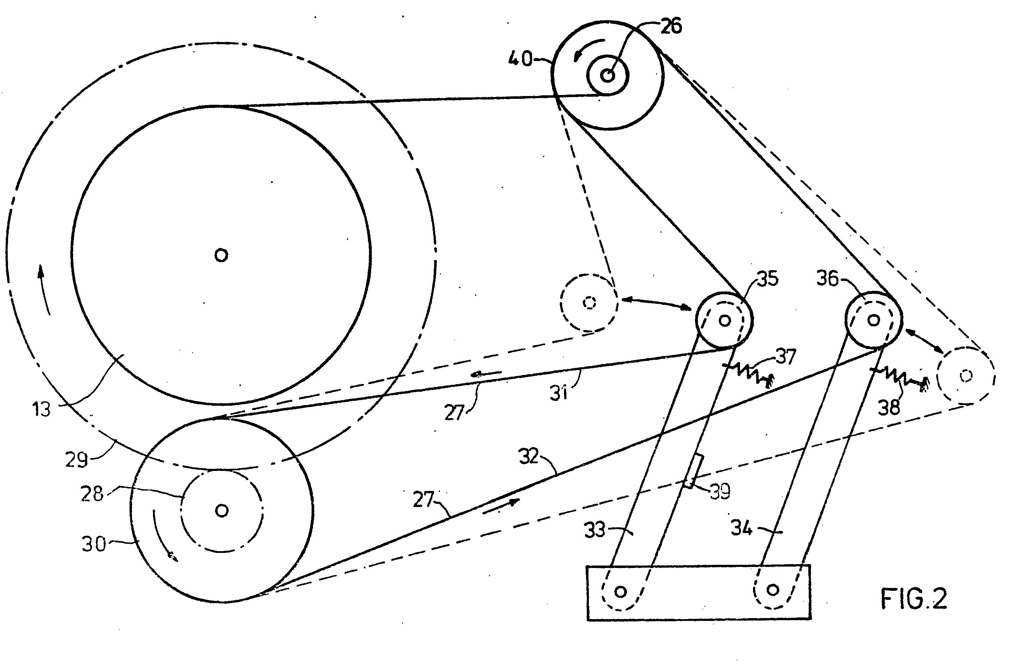

Fig. 2 zeigt den Antrieb der Wickelwelle 26 mittels eines Zahnriemenrads 40 über einen Zahnriemen 27 durch eine über Zahnräder 28, 29 mit dem Transportrad 13 gekoppelte Zahnscheibe 30, wobei Lasttrum 31 und Leertrum 32 über je eine an einem Schwenkarm 33, 34 befestigte Tänzerrolle 35, 36 mittels Federn 37, 38 einen gewinkelten Weg besitzen, der in der Ausgangsstellung durch einen Anschlag 39 festgelegt ist.

Die Vorratsrollen mit dem perforiertem Filmband 7 bzw. der Allonge 8 werden auf die zugehörige Abrollung 1, 2 geschoben und je ein Vorratsrollenleeranzeiger 5, 6 aufgelegt. Das Filmband bzw. die Allonge wird über die Umlenkrollen 9 und die Schleifenzieher 10, 11 bis zum Transportrad 12, 13 neu eingezogen bzw. vor den Schliefenziehern 10, 11 an das Ende des vorhergehenden Filmbandes 7 bzw. der Allonge 8 angeklebt.

Erreicht die untere Rollenleiste einer der Schlaufenzieher 10, 11 die obere Rollenleiste, so werden die Bremsen 3, 4 gelöst und der Schlaufenzieher füllt sich mit Film-oder Allongenband 7, 8 bis die untere Leiste die Endstellung erreicht hat.

Zur Befestigung des Filmbandes 7 an der Allonge 8 mittels Klebeband im Wickel ist ein Klebestreifenspender 23 und ein umlaufender Stempel 24 vorgesehen.

Ein weiterer Klebestreifenspender 22 hat die Aufgabe den fertigen Wickel gegen ein Aufschnurren zu sichern. Dieser Klebestreifenspender 22 drückt einen Klebestreifen mittels einer Andrückrolle über ein Loch am nachlaufenden hinteren Ende der Allongenaußenseite. Beim Wickeln klebt der Klebestreifen mit seiner freien Klebefläche durch das Loch in der Allonge die äußerste Windung des fertigen Wickels auf der darunterliegenden Windung fest und verhindert so ein Aufschnurren des Wickels beim Auswurf aus der Wickelstation 26.

Die der Allonge 8 ist aus Lichtsicherheitsgründen erheblich länger als der in sie eingewickelte Film.

Die Zusammenführung des Filmbandes 7 mit der Allonge 8 in der Filmführung 25 muß sehr exakt erfolgen und von den Längentoleranzen unabhängig sein. Die Lage der Perforationen muß demnach bei jedem Arbeitstakt zur Herstellung eines Wickels die gleiche sein bevor Filmband 7 und Allonge 8 beim Wickeln zusammengeführt werden.

Das Transportrad 12 transportiert das Filmband 7 zu der Filmführung 25. Das Transportrad ist sowohl mit Zähnen 14 zum Eingreifen in die Perforationslöcher des Filmbandes 7 als auch mit den Austrittsöffnungen der Kanäle 16 zum Ansaugen des Filmbandes 7 versehen. Die zeitweilig zwischen Filmband 7 und Transportrad 12 geblasene Luft wirkt als Luftkissen, auf dem das Filmband 7 solange gegen die Transportrichtung auf dem Transportrad 12 rutscht bis die Perforationslöcher des Filmbandes 7 an den Zähnen 14 anliegen. Der Umfang des Transportrades 12 entspricht der größten vorkommenden Länge des Filmbandes 7, dessen Gesamtlänge um bis zu 0,5 mm schwanken kann. Das so exakt auf dem Transportrad 12 orientierte Filmband 7 wird vom einem umlaufenden Messer 24 abgetrennt.

Die Allonge 8 wird auf dem Transportrad 13 nur durch einige Zähne 15, beispielsweise durch 7 Zähne bei einem 12-Bildfilm, und durch Unterdruck an den Austrittsöffnungen der Luftkanäle 17 gehalten. Durch Einblasen von Luft wird unter der Allonge ein Luftkissen erzeugt, auf dem die Allonge 8 nach vorne gezogen wird bis die Perforationslöcher gegen die Transportzähne 15 anliegen.

Der Umfang des Transportrades 13 für die Allonge 8 entspricht der kleinsten vorkommenden Allongenlänge.

Das von einem drehmoment- und drehzahlregelbaren Elektromotor angetriebene, mit konstanter Winkelgeschwindigkeit umlaufende Transportrad 13 ist mit dem Transportrad 12 über einen Sterntrieb verbunden. Der Sterntrieb ist so ausgelegt, daß das Filmband 7 und die Allonge 8 mit gleicher Geschwindigkeit transportiert werden können und pro Arbeitstakt eine Allongenlänge und eine Filmlänge gefördert werden. Während das Transportrad 13 stets umläuft wird das Transportrad 12 für das Filmband 7 durch den Sterntrieb nur zeitweise angetrieben.

Die für das Durchtrennen des Filmbandes 7 und der Allonge 8 bestimmten Schneidpartien bestehen aus je einem rotierenden, von einem der Transporträder 12, 13 angetriebenen Trennmesser 20, 21 und je einer in den Umfang eines der Transporträder 12, 13 eingebeteten Schnittplatte 18, 19.

## Patentansprüche

1. Vorrichtung zum Wickeln eines Wickels aus perforiertem Filmband bei gleichzeitiger Einlage einer perforierten Allonge, bestehend aus einem Wickelgerät mit vorgeschalteten, getrennten Zuführungen für Filmband und Allonge, die jeweils eine Abrollung für die Vorratsrolle, einen Schleifenzieher für den Längenausgleich, ein Transportrad mit zugeordnetem umlaufendem Trennmesser und Umlenkrollen besitzen, wobei in der Zuführung für das Filmband ein Klebestreifenspender mit umlaufendem Stempel angeordnet ist und Einrichtungen vorhanden sind, die es gestatten, das Filmband und die Allonge so übereinander zu wickeln, daß die Perforationen übereinander liegen, dadurch gekennzeichnet, daß die beiden durch einen Antrieb formschlüssig miteinander verbundenen Transporträder (12, 13) für Filmband (7) und Allonge (8) mit der Wickelwelle (26) über einen Zahnriemen (27) gekoppelt sind, dessen Lasttrum (31) mit Hilfe einer an einer Zugfeder (37) hängenden, einseitig mit einem Anschlag (39) versehenen Tänzerrolle (35) in zwei Schenkel unterteilt ist, die mit zunehmendem Wickeldurchmesser kürzer werden, und dessen Leertrum (32) mit Hilfe einer an einer einstellbaren Feder (38) hängenden Tänzerrolle (36) auslenkbar ist, um die freiwerdende Zahnriemenlänge aus dem Lasttrum aufzunehmen, und daß Gleitmittel vorhanden sind, die zeitweilig auf dem Umfang der Transporträder (12, 13) wirksam sind und dadurch eine Verschiebung von Filmband (7) und Allonge (8) ermöglichen so, daß deren Perforationslochränder an den jeweiligen Zähnen (14, 15) der Transporträder (12, 13) anliegen.

2. Vorrichtung nach Anspruch 1, dadurch gekennzeichnet, daß die Tänzerrollen (35, 36) an Schwenkarmen (33, 34) befestigt sind.

## Claims

1. An apparatus for winding a reel of perforated film strip and at the same time inserting a perforated covering strip, comprising a winding apparatus and, connected thereto, separate feed devices for the film strip and the covering strip, each of which feed devices comprises a supply roll for the supply reel, a loop stretcher for equalizing the lengths of strip, a driving wheel with a rotating cutting knife associated therewith and deflecting rollers, an adhesive tape dispenser with a rotating stamper being arranged in the feed device for the film strip and devices are present which allow the film strip and the covering strip to be wound on top of each other in such a way that the perforations lie on top of each other, characterised in that the two driving wheels (12, 13) for the film strip (7) and the covering strip (8) are positively connected with each other by a drive and are coupled to the winding shaft (26) by way of a sprocket belt (27) of which the taut section (31) is divided into two segments with the aid of a compensating roller (35) which is suspended by a tension spring (37) and provided with a stop (39) on one side, which segments become shorter as the diameter of the reel increases, and the slack section (32) of which sprocket belt is able to be deflected with the aid of a compensating roller (36) suspended by an adjustable spring (38) in order to take up the length of sprocket belt released from the taut section, and that sliding means are present which act for a short time on the circumference of the driving wheels (12, 13) and thereby allow the film strip (7) and covering strip (8) to be displaced in such a way that the edges of their perforations rest against the corresponding teeth (14, 15) of the driving wheels (12, 13).

2. An apparatus according to Claim 1, characterised in that the compensating rollers (35, 36) are attached to pivotal arm (33, 34).

## Revendications

1. Dispositif d'enroulement d'une bobine de pellicule perforée avec insertion simultanée d'une amorce perforée, dispositif se composant d'un appareil d'enroulement en amont duquel sont disposées des amenées séparées de la pellicule et de l'amorce dont chacune comprend un dévidoir du rouleau de réserve, un tendeur de boucles destiné à la compensation de longueur, une roue transporteuse coopérant avec une lame de sectionnement rotative ainsi que des galets de renvoi, un distributeur de ruban adhésif à poinçon rotatif étant disposé dans l'amenée de la pellicule et des dispositifs étant destinés à permettre d'enrouler la pellicule et l'amorce l'une sur l'autre de manière que les perforations soient superposées, dispositif caractérisé en ce que les deux roues transporteuses (12, 13) de la pellicule (7) et de l'amorce (8) reliées par une commande mécanique sont accouplées à l'arbre d'enroulement (26) au moyen d'une courroie crantée (27) dont le brin menant (31) est subdivisé, au moyen d'un galet compensateur (35) suspendu à un ressort de traction (37) et muni d'un côté d'une butée (39), en deux branches qui se raccourcissent avec l'augmentation du diamètre d'enroulement et dont le brin mené (32) est dévié au moyen d'un galet compensateur (36) suspendu à un ressort réglable (38) de manière à absorber la longueur libérée du brin menant de la courroie crantée, et des organes de glissement qui agissent par intermittence à la circonférence des roues transporteuses (12, 13) permettent un glissement de la pellicule (7) et de l'amorce (8) de manière que les trous de leurs bords perforés se placent en face des dents correspondantes (14, 15) des roues transporteuses (12, 13).

2. Dispositif selon la revendication 1, caractérisé en ce que les galets compensateurs (35, 36) sont montés sur des brin oscillants (33, 34).

FIG.1

FIG.2